# EUROPEAN PATENT SPECIFICATION

(11) **EP 0 553 211 B1**
(45) Date of publication and mention of the grant of the patent: **23.07.1997**
(21) Application number: 91919098.3
(22) Date of filing: 18.09.1991
(51) Int. Cl.: B32B 31/00

(54) **IMPROVED SOLAR CELL LAMINATION APPARATUS**
VERBESSERTE KASCHIERVORRICHTUNG FÜR SOLARZELLEN
APPAREIL AMELIORE POUR STRATIFIER DES CELLULES SOLAIRES

(30) Priority: 17.10.1990 US 598968
(43) Date of publication of application: 04.08.1993
(73) Proprietor: UNITED SOLAR SYSTEMS CORPORATION, Troy, MI 48084 (US)
(72) Inventor: NATH, Prem, Rochester Hills, MI 48307 (US); WHELAN, Kenneth, J., Clawson, MI 48017 (US)
(74) Representative: Jones, Andrée Zena
(86) International application number: US9106768
(87) International publication number: WO9206847

(56) References cited:
- WO-A-87/01651
- JP-A-61 024 426
- JP-A-62 189 128
- US-A- 2 992 953
- US-A- 3 074 838
- US-A- 3 347 723
- US-A- 3 964 958
- US-A- 4 067 764
- US-A- 4 184 903
- US-A- 4 210 462
- US-A- 4 287 382
- US-A- 4 382 833
- US-A- 4 421 589
- US-A- 4 450 034
- US-A- 4 509 248
- US-A- 4 542 257
- US-A- 4 596 624
- US-A- 4 601 772
- US-A- 4 692 557
- US-A- 4 968 372

## Description

This invention relates generally to apparatus for laminating a thin film layer of a synthetic plastic resin material onto a substrate; and more particularly to apparatus for economically laminating a relatively thin film sheet of dielectric polymeric material onto at least one exposed surface of a solar panel, such as an amorphous silicon solar panel, so as to encapsulate same and protect the panel from ambient conditions.

The conventional fabrication of a solar module (of the type in which a plurality of layers of thin film, generally amorphous silicon alloy material are sequentially deposited onto a web of substrate material so as to form a p-i-n solar cell) can be divided up into two generic processes: namely, the front-end fabrication process and the back-end fabrication process. Generally speaking, the front-end fabrication process includes such fundamental steps, relating to the deposition of the active layers of amorphous silicon alloy solar cell material as: providing a substrate, such as an elongated web of stainless steel; mechanically and/or plasma cleansing of the substrate; depositing one or more back reflector layers atop the cleansed surface of the stainless steel substrate; sequentially depositing at least one triad of layers of n-i-p type amorphous silicon alloy material and/or amorphous silicon-germanium alloy material atop the back reflector layers; and depositing one or more thin film layers of a transparent conductive oxide, as the upper electrode, and magnesium fluoride, as the anti-reflective coating, atop the layers of amorphous silicon alloy material.

The back end fabrication process includes such fundamental steps, relating to photovoltaic module fabrication, as: passivating short circuit defects which are inherently present in the deposited layers of silicon alloy and/or silicon germanium alloy materials; printing a grid pattern onto the exposed surface of the upper indium tin oxide electrode; attaching a plurality of regularly spaced, individual, elongated, electrically conductive strips between adjacent rows of grid fingers; securing bus bars along the longitudinal extent of the uncoated side of the substrate, completing the electrical interconnection of small area cells of the large area panel; and cutting the substrate into a predetermined individually selected module size, such as 1.22m by 0.3m (48 inches by 12 inches).

Finally, the photovoltaic panel requires that a layer of lightweight, durable, readily formable material be laminated onto, and encapsulate, one surface of that photovoltaic panel. The laminate may be selected from any material which is sufficiently durable to environmental seal the solar cell module so as to withstand ambient conditions. In order to bond the laminate to the first surface of the photovoltaic module, a flowable organic resin, such as a sheet of EVA (ethylvinylacetate) of a uniform thickness of about 0.46mm (18 mil). This flowable organic resin may be also effected by any number of methods currently known and employed by those ordinarily skilled in the art, as for instance, by spray coat deposition with any excess removed by a doctor blade or squeegee. It is to be noted that at the EVA flows, irregularities present on the surface of the photovoltaic module are filled in and an environmental shield against ambient contamination is formed about that first surface. However, the layer of EVA is soft and an outer encapsulant is still required in order to provide greater mechanical rigidity.

Accordingly, after the deposition or other disposition of the relatively thick layer of EVA, an elongated sheet of about 0.025 to 0.25mm (1 to 10 mil) thick, and preferably 0.076-0.15mm (3-6 mil) thick, dielectric organic polymeric resin of such as TEDLAR (registered trademark of Dupont Corporation) , is placed atop the EVA layer. Note that this combination of thicknesses of dielectric materials (EVA and TEDLAR) must be sufficient to electrically insulate the photogenerated current carried by the photovoltaic panel from the user.

In order to complete the lamination process and fully encapsulate the photovoltaic panel, it is then necessary to deposit a layer of the flowable organic resin to the opposite, for instance, light incident, surface of the photovoltaic panel. In a preferred embodiment, a sheet of EVA is uniformly placed thereacross, said sheet having a thickness of about 0.25 to 0.76mm(10 to 30 mils) and preferably about 0.38-0.63mm (15-25 mils). Finally, a sheet of thin, but relatively hard, abrasion resistant, durable, flexible, optically transparent, hermetically sealable material is placed or deposited upon the uppermost layer of EVA. It should also be noted that a glass plate may be employed in place of the transparent light incident encapsulant and that a metallic, fiberglass or wood back plate can be employed in addition to the rear encapsulant if added rigidity of the photovoltaic module is required.
Such rigid members can be bonded to the module utilizing the improved lamination process of the instant invention.

The last step in the encapsulating process involves the curing of the laminated stratified sandwich of upper and/or lower layers so as to provide an integrated photovoltaic module structure. Specifically, in order to effect the lamination of the outermost encapsulating sheets to the subjacent structure of the photovoltaic panel, it is necessary to employ the correct combination of pressure, temperature and time parameters.

It is to an improvement in the heretofore employed lamination/EVA curing process and associated apparatus that the instant invention is directed. More specifically, prior to the invention, conventionally employed curing apparatus were designed to urge one of a pair of spacedly disposed inflatable rubber bladders against the polymeric encapsulant EVA/surface of the photovoltaic module and the other of the pair of inflatable bladders against the opposite surface of the module. The EVA had to be cured at a temperature of above at least about 120°C at a pressure of about 101325Pa (one (1) atmosphere) in order to cross-link the molecular bonds of the constituent molecules thereof, and laminate the hard, durable synthetic resin encapsulating layer to the photovoltaic panel. Heretofore, the lamination occurred by placing discrete panels, one at a time, adjacent he large area inflatable bladder for providing the pressure required to cure the EVA and laminate the encapsulating layer. Machines currently designed to effect such two bladder-type lamination are very costly, can only laminate an encapsulant onto a single substrate per cycle and must be maintained under pressure during cool-down so as to prevent warpage of the encapsulating sheet.

A solar cell panel is described in U.S. Patent No. 4067764 which is manufactured using a vacuum lamination process for attaching a rigid face plate to a series of single crystal photo voltaic cells. The marginal portion of an outer flexible plastics film is sealed beyond the edges of the face plate around the entire periphery of the assembly to a supporting metal plate. A vacuum port is placed in the marginal portion of the film or through the baseplate in this area so that entrapped air may be withdrawn and pressure applied to improve uniform adhesion between the layers. The evacuated assembly is placed in an oven to subject it to the necessary heat and pressure to bond the layers together.

The present invention provides apparatus for the simultaneous lamination of a protective synthetic plastic resin sheet to each of a plurality of photovoltaic panels, said apparatus comprising:
means for continuously producing a plurality of photovoltaic panels;
a respective plurality of rigid support trays, each including a generally planar top surface configured to support one of said photovoltaic panels thereupon, said top surface having an O-ring associated therewith, proximate to the periphery thereof, each tray further including a plurality of apertures defined in the top surface, said apertures in communication with a vacuum fitting associated with said tray, each said tray being adapted to receive one of said photovoltaic panels together with said protective synthetic plastics resin sheet to be laminated thereto;
a plurality of diaphragms, each corresponding in size to, and configured to cover, a given one of said trays;
a rack configured to retain each of said trays in a spaced-apart relationship;
a vacuum pump in operative communication with the vacuum fitting of each of said trays; and
an oven, configured to receive and retain the rack.

In examples of apparatus according to the present invention a substantially planar, large area photovoltaic panel includes a plurality of thin film layers of amorphous silicon alloy material. The polymeric sheets are transparent to visible and near visible wavelengths of the solar spectrum and are adapted to be laminated onto at least the light incident surfaces of the respective photovoltaic panels. The polymeric sheets may also be opaque and laminated onto the non-light incident surfaces of the respective photovoltaic panels. In either event, the polymeric sheets are formed of a dielectric material capable of both insulating the current photogenerated by the photovoltaic panels from the user thereof and providing structural integrity to those photovoltaic panels.

The seal means are operatively disposed about the peripheries of each of the substrates. The apparatus further preferably includes a flowable organic resin operatively disposed between the polymeric sheets and the surfaces of the respective solar panels to be laminated.
In a preferred embodiment, the flowable organic resin is ethylvinylacetate which can be provided in sheet form.

The heating means is preferably an oven having the volumetric capacity to be capable of accepting therewithin the plurality of spacedly disposed photovoltaic panels and warming the photovoltaic panels to a temperature greater than the curing temperature of the flowable organic resin.
The substrates to be laminated are spacedly disposed on a rack, said rack including a plurality of spacedly disposed trays, and each tray of said rack being capable of receivably holding the substrates in the spaced relationship relative to one another. The oven is sized to receive the rack of trays with said spaced substrates disposed thereupon.

Each tray of said rack preferably includes a discrete vacuum port capable of allowing air to be withdrawn from the volume existing between the surface of substrates to be laminated and the respective diaphragm. A common vacuum conduit may be provided and each discrete vacuum port associated with a respective tray is operatively connected to said common vacuum conduit. The vacuum conduit is, in turn, operatively connected to said pump means. As air is withdrawn through the vacuum conduit, the pressure is uniformly transmitted over each of the respective entire surfaces of the spacedly disposed large area substrates during the heating and cooling of the flowable curing agent for bonding the polymeric sheets to the surfaces of the respective substrates.

The plurality of thin film layers of silicon alloy material of each photovoltaic panel may either be deposited upon an electrically conductive substrate or upon an electrically insulating substrate. In order to impart enhanced mechanical rigidity, a glass panel can be substituted for the light incident laminate and a fiberglass, metallic or wooden panel can be added atop the lower laminate.

There will now be described an example of apparatus for the manufacture of a photovoltaic device, according to the invention. It will be understood that the description which is intended to be read with reference to the drawings is given by way of example only and not by way of limitation.

In the drawings:-
FIGURE 1 is a fragmentary, cross-section view of a tandem photovoltaic device of the type which may be employed in the practice of the instant invention, said device comprising a plurality of N-I-P type amorphous silicon alloy photovoltaic cells;
FIGURE 2 is a schematic view of a multiple chamber deposition apparatus of the type which may be employed for the fabrication of the tandem amorphous silicon alloy photovoltaic cells illustrated in Figure 1;
FIGURE 3 is a perspective view, partially cut away, illustrating a photovoltaic panel operatively disposed between a diaphragm and one of the trays on the rack of the instant invention employed to laminate a synthetic polymeric sheet onto one or mor surfaces of a photovoltaic panel;
FIGURE 4 is a perspective view illustrating the lamination apparatus of the instant invention as operatively disposed and prepared for movement into a heating oven for the purpose of simultaneously laminating a synthetic plastic sheet onto at least one surface of a plurality of large area photovoltaic panels; and
FIGURE 5 is a schematic view of the sandwich structure of layered strata made possible through the implementation of the process of the instant invention.

### The Photovoltaic Cell

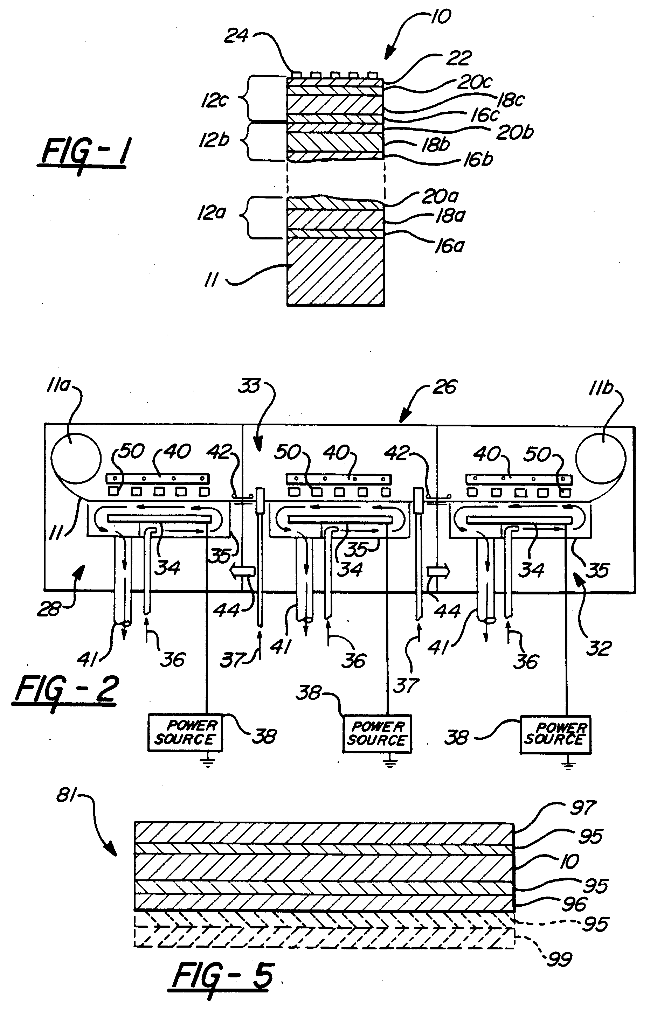

Referring now to the drawings and in particular to Figure 1, a photovoltaic cell, formed of a plurality of successively deposited N-I-P layers, each of which includes, preferably, substantially amorphous thin film semiconductor alloy material is shown generally by the reference numeral 10.

More particularly, Figure 1 shows an N-I-P type photovoltaic device, such as a solar cell, made up of individual N-I-P types cells, 12a, 12b and 12c. The lowermost cell 12a is a substrate 11 which may be formed of glass or a transparent synthetic polymeric member; or formed of a metallic material such as stainless steel.

Each of the cells 12a, 12b and 12c is preferably fabricated with a thin film semiconductor body containing at least silicon or silicon germanium alloy material. Each of the semiconductor bodies includes a P-type conductivity semiconductor layer 20a, 20b or 20c; a substantially intrinsic semiconductor layer 18a, 18b or 18c; and an N-type conductivity semiconductor layer 16a, 16b or 16c. Also, although N-I-P photovoltaic cells are illustrated, this invention may be advantageously practiced with differently configured photovoltaic cells, including single or multiple P-I-N cells, Schottky barrier cells, P-N cells, as well as with any other semiconductor device.

It is to be understood that following the deposition of the layers of semiconductor alloy material, a further deposition process may be either performed in a separate environment or as part of a continuous process. In this step, a TCO (transparent conductive oxide), indium oxide, indium tin oxide, zinc oxide, cadmium stannate or combinations thereof, is added atop the P layer 20c of the uppermost cell 12c, to function as the top electrode of the cell 10. An electrode grid 24 may be added to the device where the cell is of sufficiently large area, or if the electrical conductivity of the TCO layer 22 is insufficient to obtain the efficient collection of photovoltaically generated current.

### The Multiple Glow Discharge Deposition Chambers

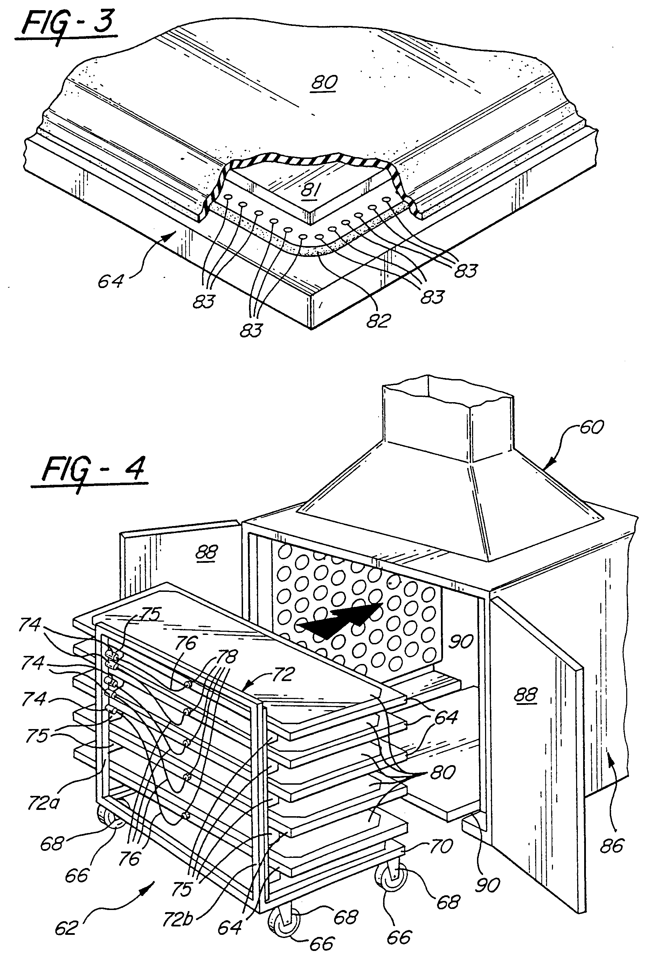

Turning now to Figure 2, a diagrammatic representation of a multiple glow discharge chamber deposition apparatus for the continuous production of photovoltaic cells is generally illustrated by the reference numeral 26. The deposition apparatus 26 includes a plurality of isolated, dedicated deposition chambers, each chamber of which is interconnected by a gas gate 42 through which (1) inert gases and (2) a web of substrate material 11 are adapted to unidirectionally pas. It is in the apparatus of this type that photovoltaic cells, similar to cell 10 described above with respect to Figure 1, may be readily manufactured.

To deposit the successive layers of semiconductor material required for producing multiple N-I-P type cells, the apparatus 26 includes at least one triad of deposition chambers. Each triad of deposition chambers comprises a first deposition chamber 28 in which a layer of N-type conductivity silicon alloy material is deposited onto the deposition surface of the substrate 11 as said substrate passes therethrough; a second deposition chamber 30 in which a layer of substantially intrinsic silicon alloy material is deposited atop the deposition surface of the N-type layer as the substrate 11 passes therethrough; and a third deposition chamber 32 in which a layer of P-type silicon alloy material is deposited atop of the intrinsic layer as the substrate 11 passes therethrough.

Each deposition chamber 28, 30 and 32 of the triad is adapted to deposit a single layer of silicon alloy material, by glow discharge deposition, onto the electrically conductive substrate 11. To that end, each of the deposition chambers 28, 40 and 32 includes: a cathode 34; a shield 35 disclosed about each of the cathodes 34; a process gas supply conduit 36; a radio frequency generator or other source of electromagnetic power 38; a process gas and plasma evacuation conduit 41; a plurality of transversely extending magnetic elements 50 for preventing warpage of the substrate; a plurality of radiant heating elements shown schematically as 40 in Figure 2; and the gas gates 42 operatively interconnecting the intrinsic deposition chamber and each adjacent dopant deposition chamber.

### The Lamination Materials

### A. Laminates

Exemplary thermoplastic organic polymeric resins especially suited as encapsulants for purposes of the instant invention are fluorine containing hydrocarbon polymers having general formulae of the type:

-(CH₂CXF)-, and [(CH₂CH₂) (CX'X''X'''F)].

That is, the organic polymeric resin may be polyvinyl fluoride where X is hydrogen, or polyvinylidene fluoride (PVDF) where X is fluorine. One readily available PVDF formulation is Dupont "TEDLAR" polyvinylidene fluoride. Alternatively, the thermoplastic organic polymeric resin may be a copolymer, as a random co-polymer, bloc copolymer, or alternating copolymer of ethylene and a fluorine containing olefinic moiety, where X', X'', and X''' are individually selected form the group consisting of hydrogen and fluorine. For example X', X'', and X''' may each be fluorine, as in Dupont "TEFZEL"™ copolymer of ethylene and tetrafluoroethylene, or each may be chlorine as in Allied-Signal Corporation "HALAR"™ copolymer of ethylene and chlorotrifluoroethylene. Alternatively, the (CX'X''X'''F) moiety may contain hydrogen atoms as in Asahi Chemical Company's "ALAR"™ thermoplastic resin. Especially preferred are polyvinylidene fluoride (PVDF) and copolymers of ethylene and perfluorethylene.

Dupont KEVLAR™ is poly(1,4-phenyleneterephthalamide), an amide (-NH or -NH₂ group vice COOH; polymerizes through a C=N bond and a C-NH bond) analog of the plastic used to make carbonated beverage bottles. KEVLAR also represents preferred encapsulant.

### B. Adhesives

Suitable adhesives for bonding the laminate to the photovoltaic module of the instant invention are vinyl acetate type materials having the general formula:

R-CH₂CH₂=CH(O-CO-CH₃)

where R may be hydrogen, as in vinyl acetate, or a short alkyl group, for example, CH₃ as in methyl vinyl acetate, or CH₂CH₃ as in ethyl vinyl acetate. According to a still further embodiment, the vinyl acetate material may be hydrolyzed, e.g., to form polyvinyl alcohol, "PVA", or hydrolyzed and condensed with an aldehyde, e.g., to yield polyvinyl formal, "PVF."

### The Laminator of the Instant Invention

Turning now to Figures 3-4, illustrated therein is the laminating apparatus of the instant invention, said apparatus indicated generally by the reference numeral 60.
More specifically, said lamination apparatus 60 includes a generally upright, horizontally extending rack 62 having a plurality of vertically spaced trays 64 operatively disposed thereupon. While in one of the preferred embodiments of the instant invention, the horizontal trays 64 are vertically spaced, in other preferred embodiments, the trays 64 may be either horizontally spaced or angularly spaced without departing from the spirit or scope of the invention. Also, while the rack 62 is shown with a plurality of wheels 66 rotatably mounted to an inverted U-shaped support bracket 68, other transfer mechanisms for translating the rack 62 into and out of the oven 86 may be employed without departing from the or scope of the instant invention.

The rack 62 further includes a bottommost, generally rectangular support frame member 70, proximate the four corners of which the inverted U-shaped, wheel-supporting brackets 68 are secured and an upright, generally rectangularly shaped support frame member 72. At least one of the bottommost support member 70 or the upright support member is adapted to form a passageway for withdrawing air from one or more of the plurality of trays 64. This withdrawal of air is an important part of the lamination process which will be described in more detail in the paragraphs which follow hereinafter. Spacedly secured to one side of each vertically extending legs 72a and 72b of the support member 72 are a plurality of cantilevered tray support strips 75 which are adapted to maintain the trays in said vertically spaced, horizontally disposed disposition relative to one another.

Each one of the plurality of the horizontally disposed trays 64 is elongated and generally rectangularly shaped for receiving thereupon the similarly shaped and sized, large area photovoltaic panels to be laminated with the sheet of synthetic plastic resin material. As best illustrated in Figure 4, at least the upper left hand portion of the left support leg 72a of the support member 72 includes a plurality of conduit stubs 74, the total number of stubs equal in number to the total number of trays 64 spacedly disposed on said rack 62. Each of the conduit stubs 74 is connected to a corresponding one of the trays 64 by a discrete flexible vacuum hose 76, each hose of which is in operative communication with the interior of said trays by a tubular fitting 78.

While not illustrated, and as will be more fully understood from the description of Figure 3 which follows in subsequent paragraphs, it should be readily understood that the hollow portion of the support member 72 operatively communicates with a pump which is selectively activated for withdrawing air from desired ones of the trays 64 and creating the vacuum condition required in order to simultaneously effect the lamination of a thin, flexible polymeric protective sheet onto one or both surfaces of one or more of the photovoltaic panels disposed thereupon. In other words, by withdrawing air from and creating a partial vacuum in desired ones or all of the horizontal trays 64, the O-ring 82 disposed about the periphery of the diaphragm 80 is seated against the circumferential extent of the tray 74 thereby urging said diaphragm 80 so as to uniformly apply pressure to the entire surface of the large area laminate sheet 84 disposed between the photovoltaic panel and the tray 64. With the correct amount of pressure applied, about 133322Pa (one (1) torr), across the entire large area surface, the rack 62 can be wheeled, or otherwise transported, through the hinged doors 88, into the tracks 90 formed on the floor of a large oven 86. The oven 86 can then be heated to at least the curing temperature of the flowable adhesive, i.e., about 120-160°C (preferably about 140°C) for about 30-60 minutes. Of course, the combination of temperature, pressure and time parameters can be modified as desired without departing from the spirit or scope of the invention. The parameters set forth herein are merely intended to represent a best mode of performances.

Referring now to Figure 5, the multilayers of the stratified sandwich structure which combine to form the photovoltaic module 8, of the instant invention are illustrated in side view. More particularly, the thin film photovoltaic cell 10 includes a layer 95 of EVA or other flowable organic resin on both of the approved, generally planar, large are surfaces thereof. A photovoltaic cell 10 is placed upon a tray 64 so that the transparent laminate 97 formed of, for instance, TEFZEL or glass is bonded by the upper layer of EVA to the light incident surface of the photovoltaic cell 10 while the opaque laminate 96 formed of, for instance, TEDLAR is bonded by the lower layer of EVA to the opposite surface of the cell 10. It is to be noted that additional mechanical rigidity may be provided by bonding a sheet 99 of relatively rigid, preferably lightweight material, such as fiberglass aluminum or galvanized steel, to the lowermost surface of the TEDLAR laminate 96. Again, the bonding agent can be a layer of EVA operatively disposed between the TEDLAR laminate 96 and the rigidifying material 99. Because the rigidifying layer does not form an essential feature of the instant invention, said layer as well as the accompanying sheet of EVA are illustrated in phantom outline in Figure 5. The important aspect to be gained from the foregoing description is that the light incident laminate 97, the lower laminate 96, and the lower rigidifying laminate 99 may all be affixed to the photovoltaic cell 10 by employing the method of the instant invention.

Turning once again to Figure 3, there is illustrated the combination of structural elements which form the individual lamination layers of the invention. More particularly, the tray 64 (which is typical of each of the trays vertically spaced on the rack 62 of Figure 4), is sized and shaped to be somewhat larger than the size and shape of the photovoltaic module 81 or other substrate to be encapsulated. A similarly sized and shaped, vacuumizable diaphragm 80, such as a rubber diaphragm, is sized, shaped and operatively disposed to cover substantially the entire upper surface of the tray 64. An O-ring 2 extends about the peripheral extent of the diaphragm 80 such that it is capable of seating against the tray 64 with the photovoltaic panel 81 also disposed thereon. A plurality of apertures 83 (communicating with the pump via the vacuum hoses 76, conduit stubs 74 and hollow support leg 82A) are also spacedly disposed about the periphery of the tray; i.e. internally of the O-ring 82 but externally of the edge of the photovoltaic module 81. By activating a pump, air is withdrawn from the volume between the diaphragm and the photovoltaic module, through the apertures 83, so as to uniformly force the diaphragm against the upper surface of that module.

The many functional and economic advantages of the instant invention should be immediately apparent to the ordinarily skilled artisan. Whereas the prior art lamination apparatus (discussed in earlier in this specification) required upper and lower bladders to be filled with air to apply pressure to force the laminate sheet against the substrate, the instant apparatus employs but a single sheet of diaphragm material. Of course the prior art apparatus provided for the encapsulation of but a single substrate at a time, while the apparatus of the instant apparatus can simultaneously encapsulate a plurality of substrates. In addition thereto, the throughput has been further increased because it is no longer necessary to keep the rack in the oven during the lengthy cool-down cycle required to prevent warpage of laminate. This is because the substrates can be maintained under pressure during cool-down in the mobile rack of the instant invention. The apparatus of the instant invention can be made for a fraction of the US $60,000 cost which Spire Corporation currently (1990) sells what was previously considered the "state-of-the-art" lamination apparatus. In addition thereto, the subject lamination apparatus is more efficient than the aforementioned lamination apparatus of the prior art because of the improved convection heating made possible in the open-sided rack/tray assembly of the instant invention. For all of the foregoing reasons, the subject lamination apparatus represents a marked step forward in the art of photovoltaic panel fabrication.

Finally it should be noted that the applicability of the instant lamination apparatus for mass production has been stressed hereinabove. The apparatus can be accomplished in a continuous manner by providing a plurality of racks 62 which are cycled through the oven 86. It should be appreciated that the instant process provides for one rack to be loaded while a second rack is in the oven while a third rack is cooling down and while a fourth rack is unloaded. The prior art could not be employed in such a continuously cycling mass production mode of operation.

Various modifications may be made within the scope of the scope of the invention as defined by the following claims. For example, while a rectangular configuration for the photovoltaic module was described and illustrated hereinabove, the formable laminates of the subject invention may be shaped into any given configuration, such as circular or triangular.

## Claims

1. Apparatus (6) for the simultaneous lamination of a protective synthetic plastic resin sheet (97) to each of a plurality of photovoltaic panels (10), said apparatus comprising:
means (26) for continuously producing a plurality of photovoltaic panels;
a respective plurality of rigid support trays (64), each including a generally planar top surface configured to support one of said photovoltaic panels (10) thereupon, said top surface having an O-ring (82) associated therewith, proximate to the periphery thereof, each tray further including a plurality of apertures (83) defined in the top surface, said apertures in communication with a vacuum fitting (78) associated with said tray, each said tray (64) being adapted to receive one of said photovoltaic panels (10) together with said protective synthetic plastics resin sheet (97) to be laminated thereto; a plurality of diaphragms (80), each corresponding in size to, and configured to cover, a given one of said trays (64);
a rack (62) configured to retain each of said trays (64) in a spaced-apart relationship;
a vacuum pump in operative communication with the vacuum fitting (78) of each of said trays (64); and
an oven (86), configured to receive and retain the rack (62).

2. An apparatus as in claim 1, wherein said plurality of apertures (83) is defined in each of said trays (64) proximate to said O-ring (82).

3. An apparatus as in claim 1, wherein each tray (64) includes a hose (76) associated with the vacuum fitting (78) thereof for establishing operative communication with said vacuum pump.

4. An apparatus as in claim 1, wherein said support frame (70) includes a vacuum connector (74) which establishes communication between the vacuum fitting (78) of each of said trays (64) and the vacuum pump.

5. An apparatus as in claim 1, wherein said plurality of diaphragms (80) comprises a plurality of rubber diaphragms.

6. An apparatus as in claim 1, wherein said rack (62) includes wheels (66).

7. An apparatus as in claim 6, wherein said oven (86) includes guide members (90) which engage the wheels (66) of the rack (62).

## Patentansprüche

1. Vorrichtung (6) für das gleichzeitige Kaschieren einer schützenden synthetischen Kunstharzfolie (97) auf eine jede einer Vielzahl von Sperrschichtplatten (10), wobei die Vorrichtung aufweist:
eine Einrichtung (26) für die kontinuierliche Herstellung einer Vielzahl von Sperrschichtplatten;
eine entsprechende Vielzahl von starren Aufnahmeschalen (64), die jeweils eine im allgemeinen ebene obere Fläche umfaßt, die so ausgeführt ist, daß sie eine der Sperrschichtplatten (10) darauf aufnimmt, wobei die obere Fläche einen damit verbundenen Runddichtring (82) in der Nähe ihres Umfanges besitzt, und wobei jede Schale außerdem eine Vielzahl von Öffnungen (83) umfaßt, die in der oberen Fläche festgelegt sind, wobei die Öffnungen in Verbindung mit einer Vakuumausrüstung (78) mit der Schale verbunden sind, wobei jede Schale (64) so ausgeführt ist, daß sie eine der Sperrschichtplatten (10) zusammen mit der darauf zu kaschierenden schützenden synthetischen Kunstharzfolie (97) aufnimmt;
eine Vielzahl von Trennwänden (80), die jeweils in der Abmessung einer bestimmten Schale (64) entsprechen und so ausgeführt sind, daß sie diese bedecken;
ein Gestell (62), das so ausgeführt ist, daß es jede Schale (64) in einer voneinander einen Abstand aufweisenden Beziehung festhält;
eine Vakuumpumpe in funktioneller Verbindung mit der Vakuumausrüstung (78) einer jeden Schale (64); und
einen Ofen (86), der so ausgeführt ist, daß er das Gestell (62) aufnimmt und festhält.

2. Vorrichtung nach Anspruch 1, bei der die Vielzahl der Öffnungen (83) in jeder Schale (64) in der Nähe des Runddichtringes (82) festgelegt ist.

3. Vorrichtung nach Anspruch 1, bei der jede Schale (64) einen Schlauch (76) in Verbindung mit deren Vakuumausrüstung (78) für das Einrichten einer funktionellen Verbindung mit der Vakuumpumpe umfaßt.

4. Vorrichtung nach Anspruch 1, bei der der Gestellrahmen (70) ein Vakuumanschlußteil (74) umfaßt, das die Verbindung zwischen der Vakuumausrüstung (78) einer jeden Schale (64) und der Vakuumpumpe einrichtet.

5. Vorrichtung nach Anspruch 1, bei der die Vielzahl der Trennwände (80) eine Vielzahl von Gummitrennwänden aufweist.

6. Vorrichtung nach Anspruch 1, bei der das Gestell (62) die Räder (66) umfaßt.

7. Vorrichtung nach Anspruch 6, bei der der Ofen (86) die Führungselemente (90) umfaßt, die mit den Rädern (66) des Gestells (62) in Eingriff kommen.

## Revendications

1. Appareil (6) servant à stratifier simultanément une feuille de résine plastique synthétique (97) de protection, respectivement, sur une pluralité de panneaux photovoltaïques (10) ledit appareil comprenant:
un moyen (26) pour produire en continu une pluralité de panneaux photovoltaïques;
une pluralité de plateaux de support (64) rigides respectifs pourvus chacun d'une surface de sommet généralement plane configurée de manière à porter un desdits panneaux photovoltaïques (10), ladite surface de sommet ayant un anneau torique (82) qui lui est associé, à proximité de sa périphérie, chaque plateau étant également pourvu d'une pluralité d'ouvertures (83) définies dans la surface de sommet, lesdites ouvertures communiquant avec un raccord à vide (78) associé audit plateau, chacun desdits plateau (64) étant adapté pour recevoir un desdits panneaux photovoltaïques (10) en même temps que ladite feuille de résine plastique synthétique (97) de protection devant être stratifiée sur le panneau;
une pluralité de membranes (80), chacune d'elles ayant une taille correspondante à un desdits plateaux (64) et étant configurée pour le couvrir;
un bâti (62) configuré pour maintenir chacun desdits plateaux (64) de manière à ce qu'ils présentent un espacement entre eux;
une pompe à vide en communication fonctionnelle avec le raccord à vide (78) de chacun desdits plateaux (64); et
un four (86) configuré pour recevoir et retenir le bâti (62).

2. Appareil selon la revendication 1, dans lequel ladite pluralité d'ouvertures (83) est définie dans chacun desdits plateaux (64) à proximité dudit anneau torique (82).

3. Appareil selon la revendication 1, dans lequel chaque plateau (64) est pourvu d'un tuyau flexible (76) associé au raccord à vide (78) du plateau afin d'établir une communication fonctionnelle avec ladite pompe à vide.

4. Appareil selon la revendication 1, dans lequel ledit cadre de support (70) comprend un connecteur à vide (74) qui établit une communication entre le raccord à vide (78) de chacun desdits plateaux (64) et la pompe à vide.

5. Appareil selon la revendication 1, dans lequel ladite pluralité de membranes (80) comprend une pluralité de membranes en caoutchouc.

6. Appareil selon la revendication 1, dans lequel ledit bâti (62) inclut des roues (66).

7. Appareil selon la revendication 6, dans lequel ledit four (86) comprend des éléments de guide (90) qui s'engagent avec les roues (66) du bâti (62).
